(19) **Europäisches Patentamt**

**European Patent Office**

**Office européen des brevets**

(11) **EP 1 362 172 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.⁷: **F02D 41/14**, F02D 41/02, F01N 3/08

(21) Anmeldenummer: **02710040.3**

(22) Anmeldetag: **25.01.2002**

(86) Internationale Anmeldenummer:
**PCT/EP2002/000837**

(87) Internationale Veröffentlichungsnummer:
**WO 2002/066811 (29.08.2002 Gazette 2002/35)**

(54) **VERFAHREN UND VORRICHTUNG ZUM BETREIBEN EINES MAGERLAUFFÄHIGEN UND SCHICHTLADEFÄHIGEN OTTOMOTORS**

METHOD AND DEVICE FOR OPERATING A SPARK IGNITION ENGINE THAT IS CAPABLE OF RUNNING LEAN AND OF STRATIFIED CHARGING

PROCEDE ET DISPOSITIF POUR ACTIONNER UN MOTEUR A ALLUMAGE COMMANDE POUVANT ETRE A MELANGE PAUVRE ET A CHARGE STRATIFIEE

(84) Benannte Vertragsstaaten:
**DE ES FR GB IT**

(30) Priorität: **16.02.2001 DE 10107270**

(43) Veröffentlichungstag der Anmeldung:
**19.11.2003 Patentblatt 2003/47**

(73) Patentinhaber: **Volkswagen Aktiengesellschaft**
**38436 Wolfsburg (DE)**

(72) Erfinder:
 • **POTT, Ekkehard**
  **38518 Gifhorn (DE)**
 • **ZILLMER, Michael**
  **38173 Sickte (DE)**

(74) Vertreter: **Pohlmann, Bernd Michael**
**Reinhardt & Pohlmann**
**Patentanwälte**
**Günthersburgallee 40**
**60316 Frankfurt am Main (DE)**

(56) Entgegenhaltungen:
**WO-A-00/34631          US-A- 5 910 096**

 • **DATABASE WPI Section PQ, Week 199925 Derwent Publications Ltd., London, GB; Class Q51, AN 1999-297196 XP002198152 & JP 11 101147 A (MATSUDA KK), 13. April 1999 (1999-04-13)**

**Beschreibung**

Die vorliegende Beschreibung betrifft ein Verfahren zum Betreiben eines magerlauffähigen und schichtladefähigen Ottomotors, insbesondere eines direkteinspritzenden Ottomotors, gemäß dem Oberbegriff des Anspruchs 1. Sie betrifft auch einen Ottomotor und ein Kraftfahrzeug zur Durchführung dieses Verfahrens.

Magerlauffähige Ottomotoren, insbesondere Direkteinspritzer, zeichnen sich zwar durch besonders günstige Verbrauchswerte aus, sind jedoch zur Einhaltung "scharfer" Abgasgrenzwerte auf eine katalytische Abgasnachbe-handlung durch $NO_x$-Speicherkatalysatoren angewiesen, die einen großserienmäßigen Einsatz entsprechender Motoren und eine konsequente Ausnutzung des mit ihnen verbundenen sehr großen Verbrauchseinsparpotentials sehr erschwert und dazu geführt hat, daß auf dem Markt (insbesondere in Japan) bisher erst sehr wenige Fahrzeugmodelle mit einer entsprechenden Motorisierung erschienen sind. Diese beruhen im wesentlichen auf Mager/Mix-Konzepten mit entsprechenden Kompromissen zwischen Emission und Kraftstoffverbrauch oder ausschließlich auf einer relativ verbrauchsungünstigen homogen-stöchiometrischen Betriebsweise, um mit konventionellen 3-Wege-Abgasnachbehandlungstechnologien auszukommen.

Aus der JP 11 101 147 A ist eine Motorsteuerungseinrichtung für einen Verbrennungsmotor mit NOx-Speicherkatalysator bekannt, die ermöglichen soll den Motor in einem niedrigen Last- und/oder Drehzalbereich im Schichtladebetrieb und in einem hohen Last- und/oder Drehzahlbereich in einer homogen-stöchiometrischen Betriebsweise zu betreiben.

Die Hauptprobleme der $NO_x$-Speicherkatalysator-Technologie bestehen zum einen in einer (bei gewissen Betriebsbedingungen allerdings im wesentlichen reversiblen) schleichenden Vergiftung und Desaktivierung der Katalysatoren durch den im Kraftstoff enthaltenen Schwefel, die regelmäßige Katalysatorregenerationen erforderlich macht, und zum anderen in ihrem eingeschränkten Arbeitstemperaturfenster zwischen einer Anspringtemperatur von etwa 200°C und einer maximalen Arbeitstemperatur von etwa 500°C, oberhalb der keine effiziente Einlagerung der Stickoxide mehr erfolgt, so daß keine ordnungsgemäße Abgasreinigung mehr gewährleistet ist. Für einen Magerbetrieb müssen somit nicht nur brennverfahrensseitige Randbedingungen eingehalten werden sondern es müssen insbesondere stets auch hinreichend niedrige Katalysatortemperaturen gewährleistet sein, um die vorgeschriebenen "scharfen" Abgasnormen erfüllen zu können. Bei Alterung der NOx-Speicherkatalysatoren wird das Arbeitstemperaturfenster der Mager-NOx-Einlagerung eingeengt. Insbesondere die obere Temperaturgrenze kann bei thermischer Überlastung des NOx-Speicherkatalysators auf unter 400°C einbrechen.

Bei niedrigen Drehzahlen und Lasten können magerlauffähige Ottomotoren oder Magermotoren geschichtet-mager betrieben werden. Bei sehr niedrigen Lasten (< 2 bar eff. Mitteldruck) sind die Abgas- und Katalysatortemperatur noch hinreichend niedrig, um eine ordnungsgemäße Abgasreinigung zu gewährleisten, wobei sich durch diese Betriebsweise die günstigsten Verbrauchswerte erreichen lassen.

Bei hoher Motorlast oder bei geforderter hoher Beschleunigung mit entsprechend hohen Abgas- und Katalysatortemperaturen wird jedoch auf einen homogenen insbesondere stöchiometrischen Betriebsmodus und eine 3-Wege-Abgasnachbehandlung umgeschaltet, wobei sich unter Inkaufnahme relativ hoher Stickoxidrohemissionen nach wie vor recht günstige Verbrauchswerte realisieren lassen.

In einem etwas höheren Lastbereich (bis ca. 4 bar) ist brennverfahrensseitig je nach Katalysatorzustand noch ein eingeschränkter Schichtbetrieb möglich. Besonders eingeschränkt ist dies bei gealterten Katalysatorsystemen, deren Grenztemperatur der Mager-NOx-Einlagerungsfähigkeit unter den Werten eines frischen Systems liegt.

Die Aufgabe der vorliegenden Erfindung besteht in der Schaffung eines entsprechenden Betriebsverfahrens für einen magerlauffähigen Ottomotor, insbesondere Direkteinspritzer, das nicht nur durch günstigere Verbrauchswerte als die herkömmlichen Verfahren gekennzeichnet ist sondern auch die Einhaltung schärfster Abgasgrenzwerte (z. B. D4) gewährleistet, wie sie beispielsweise bereits bis zum Jahre 2005 verbindlich vorgeschrieben sind. Die Aufgabe besteht zudem in der Schaffung eines Ottomotors und eines Kraftfahrzeugs zur Durchführung dieses Verfahrens.

Diese Aufgabe wird bei einem gattungsgemäßen Verfahren erfindungsgemäß dadurch gelöst, daß die Katalysatortemperatur in einem Betriebsbereich, in dem infolge der hohen Abgas- und Katalysatortemperaturen herkömmlicherweise lediglich ein homogenstöchiometrischer Betrieb mit relativ ungünstigen Verbrauchswerten möglich ist, durch Kühlung der dem $NO_x$-Speicherkatalysator zugeführten Abgase und/oder des $NO_x$-Speicherkatalysators selbst gezielt abgesenkt und stattdessen ein deutlich verbrauchsgünstigerer Schichtladungs-Betriebsmodus eingestellt wird. In einem mittleren, im Realverkehr häufig angefahrenen kundenrelevanten Drehzahlbereich zwischen etwa 1500 und 3000 min$^{-1}$ und einem effektiven Mitteldruck zwischen etwa 1 und 4 bar, insbesondere 1 - 3,5 bar, wird hierbei ein Schichtladungsanteil von zumindest etwa 30% eingestellt, was zu einer merklichen Verbrauchsabsenkung führt. Bei einer bevorzugten Verfahrensvariante mit besonders günstigen Verbrauchswerten wird sogar ein Schichtladungsanteil von zumindest etwa 40%, insbesondere jedoch zumindest etwa 50%, eingestellt.

Zur Einhaltung der aktuellen sowie der zumindest in den nächsten 5 Jahren vorgesehenen oder zu erwartenden Abgasnormen wird die Katalysatortemperatur hierbei so gesteuert, daß die $NO_x$-Emission hinter dem $NO_x$-Speicherkatalysator in mindestens 70% des genannten Kennfeldbereiches höchstens etwa 10 g/h und/oder der mittlere

NO$_x$-Konvertierungsgrad des NOx-Speicherkatalysators zumindest etwa 70% beträgt, so daß das erfindungsgemäße Verfahren nicht nur sehr verbrauchsgünstig ist sondern auch äußerst günstige Emissionswerte ermöglicht. Der Ottomotor und der NO$_x$-Speicherkatalysator werden vorzugsweise sogar so betrieben, daß die NO$_x$-Emission hinter dem NO$_x$-Speicherkatalysator höchstens etwa 6 g/h und/oder der mittlere NO$_x$-Konvertierungsgrad des NOx-Speicherkatalysators zumindest etwa 85% beträgt.

Der geschichtet-mager Betrieb kann im Swirl-Verfahren (Drehachse der im Zylinder rotierenden Gase liegt in etwa auf der Zylinderrotationsachse), insbesondere jedoch im Tumble-Verfahren erfolgen (Drehachse der im Zylinder rotierenden Gase liegt in etwa senkrecht zur Kolbenbewegungsrichtung).

Zur Steuerung der Katalysatortemperatur wird hierbei vorzugsweise eine Kühlvorrichtung mit einer steuerbaren oder schaltbaren Kühlleistung verwendet, um einerseits erforderliche Kühlmaßnahmen bedarfsgerecht und effektiv durchführen zu können und um andererseits notwendige Katalysator-Heizmaßnahmen, wie beispielsweise bei der Durchführung anstehender Regenerations- oder De-Sulfatierungsvorgänge oder beim schnellen Aufheizen auf die Anspringtemperatur, nicht durch eine für einen Aufheizvorgang kontraproduktive Wärmeabfuhr zu behindern und zu verzögern. Die Durchströmung der Kühlvorrichtung mit Abgas oder einem Kühlmedium ist hierbei gegenüber einer durch Konstruktion, Einbaulage im Fahrzeug und momentanem Fahrzustand vorgegebenen maximalen Durchströmung je nach Bedarf gezielt einstellbar oder steuerbar, was auch eine Zu- und Abschaltbarkeit der Kühlvorrichtung zur selektiven Durchführung von Kühlmaßnahmen umfaßt.

Zur Steigerung der Kühlleistung wird hierbei vorzugsweise eine Kühlvorrichtung oder ein Wärmetauscher mit vorzugsweise schaltbar ausgebildeten Führungseinrichtungen für eine Kühlluftströmung, wie beispielsweise Luftleitbleche und/oder NACA-Düsen und/oder speziell ausgebildete strömungsbeeinflussende Schallschluck-Unterbodenkapseln, verwendet, mit denen die Luftströmung im Kfz-Unterbodenbereich gezielt um und/oder durch die Kühlvorrichtung oder den Wärmetauscher geleitet wird und dadurch für eine deutliche Verbesserung der Wärmeabfuhr sorgt.

Alternativ oder ergänzend zu einer Luftkühlung kann auch ein spezielles Kühlmittel, wie z.B. Wasser, eingesetzt werden, mit dem sich eine spürbar bessere Wärmeabfuhr als bei einer Luftkühlung erreichen läßt.

Zur Kühlung der Abgase und/oder des NO$_x$-Speicherkatalysators auf das gewünschte Temperaturniveau wird vorzugsweise eine Kühlvorrichtung verwendet, deren Kühlleistung um zumindest 50% höher ist als die Kühlleistung einer dem Ottomotor zugeordneten herkömmlichen Abgasanlage, die keine zusätzliche Kühlvorrichtung umfaßt und lediglich durch die normale Luftströmung im Kfz-Unterbodenbereich passiv gekühlt wird.

Vorzugsweise wird eine Kühlvorrichtung mit einer gegenüber einer herkömmlichen Abgasanlage zusätzlichen Kühlleistung von zumindest etwa 0,8 kW, insbesondere zumindest etwa 1,0 kW, verwendet. Unter einer bei herkömmlichen Kraftfahrzeugen üblichen Abgasanlage wird die konstruktiv kürzestmögliche Verbindung zwischen Zylinderkopf, Vorkatalysator (sofern vorhanden) und NO$_x$-Speicherkatalysator verstanden. Bei einer bevorzugten Verfahrensvariante mit einer besonders effektiven Abgas- und Katalysatorkühlung wird eine Kühlvorrichtung mit einer Kühlleistung von zumindest etwa 1,5 kW zusätzlich verwendet.

Bei Vollast des Ottomotors erfolgt die Kühlung vorzugsweise mit einer zusätzlichen Kühlleistung von bis zu etwa 30 kW oder etwa 22 kW pro Liter Hubraum oder bis zu etwa 0,5 kW pro kW Motorleistung.

Die dem NO$_x$-Speicherkatalysator zugeführten Abgase bzw. der Katalysator selbst werden durch die genannten Kühlmaßnahmen mit den angegebenen Kühlleistungen vorzugsweise auf $\leq 425°C$, insbesondere $\leq 415°C$, abgekühlt, um eine möglichst hohe Katalysatoraktivität mit einer entsprechend hohen Stickoxideinlagerung zu gewährleisten. Bei der angegebenen bevorzugten Verfahrensvariante mit einer besonders effektiven Abgas- und Katalysatorkühlung werden die Abgase durch die hohe Kühlleistung von zumindest etwa 1,5 kW sogar auf $\leq 395°C$ abgekühlt.

Zur Überprüfung und zur Gewährleistung einer ordnungsgemäßen Einhaltung der erforderlichen katalysatorseitigen Randbedingungen wird die Katalysatortemperatur vorzugsweise kontinuierlich bestimmt, mit vorgegebenen oder gewünschten Temperaturwerten verglichen und als Steuergröße zur Einstellung der Motorbetriebsweise verwendet. Die Bestimmung der Katalysatortemperatur erfolgt hierbei vorzugsweise mittels je eines dem NO$_x$-Speicherkatalysator vor- bzw. nachgeschalteten Temperatursensors und/oder mittels zumindest eines direkt an dem NO$_x$-Speicherkatalysator angebrachten Temperaturfühlers, deren Temperatursignale einer zugeordneten Motorsteuerungseinrichtung zur Erfassung und Auswertung zugeführt werden. Die Katalysatortemperatur kann jedoch auch durch geeignete Modellierungen oder Modellrechnungen bestimmt werden.

Zur präzisen Regelung des Mager- und NO$_x$-Regenerationsbetriebes, insbesondere zur Erfassung eventueller NO$_x$-Durchbrüche und zur Erkennung eventueller Katalysatorunregelmäßigkeiten oder -schädigungen, wird zudem noch vorzugsweise die NO$_x$-Konzentration im Abgas mittels eines hinter dem NO$_x$-Speicherkatalysator angeordneten NO$_x$-Sensors gemessen, dessen Meßsignale ebenfalls an der Motorsteuerungseinrichtung anliegen.

Zur Durchführung dieses erfindungsgemäßen Verfahrens wird vorzugsweise ein durch ein softwaremäßiges und/oder konstruktive Auslegung für eine Schichtladungs-Betriebsbereichserweiterung zu höheren Drehzahlen und Lasten hin speziell ausgelegter Ottomotor verwendet.

Ein erfindungsgemäßes Kraftfahrzeug zur Durchführung des beschriebenen Verfahrens umfaßt:

- einen magerlauffähigen Ottomotor, insbesondere einen schichtladefähigen Direkteinspritzer, der vorzugsweise durch eine softwaremäßige und/oder konstruktive Auslegung speziell für die oben beschriebene Betriebsweise ausgelegt ist;

- eine dem Ottomotor nachgeschaltete Abgasanlage mit einem $NO_x$-Speicherkatalysator und einer Kühlvorrichtung zur Kühlung des $NO_x$-Speicherkatalysators und/oder der ihm zugeführten Abgase, wobei die Abgasanlage vorzugsweise noch zumindest einen dem $NO_x$-Speicherkatalysator vor- und/oder nachgeschalteten Temperatursensor und/oder zumindest einen an dem $NO_x$-Speicherkatalysator angebrachten Temperatursensor sowie einen dem $NO_x$-Speicherkatalysator nachgeschalteten $NO_x$-Sensor umfaßt; und

- eine zugeordnete Motor-Steuerungseinrichtung zur Steuerung der oben beschriebenen erfindungsgemäßen Motor- und Katalysatorbetriebsweise sowie zur Erfassung und Auswertung der Meßsignale der genannten Sensoren und zur betriebspunktabhängigen Durchführung von Emissions- und Temperaturmodellierungen.

Die Kühlvorrichtung kann alle bekannten passiv wirksamen und aktiv schaltbaren Abgas- und/oder Katalysatorkühlungsmaßnahmen, wie z. B. eine Krümmerkühlung, mehrflutige Vorrohre, luft- oder wassergekühlte Wärmetauscher stromauf des $NO_x$-Speicherkatalysators umfassen. Sie ist jedoch vorzugsweise durch

- eine Steuerungseinrichtung für die Kühlleistung;
- Führungseinrichtungen für eine Kühlluftströmung, wie z.B. geeignet ausgebildete vorzugsweise schaltbare Luftleitbleche und/oder NACA-Düsen und/oder speziell ausgebildete strömungsbeeinflussende Schallschluck-Unterbodenkapseln;
- ein anderes Kühlmittel als Luft, das alternativ oder zusätzlich zu einer Luftkühlung eingesetzt werden kann; und/oder
- eine um etwa 50% höhere Kühlleistung als eine dem Ottomotor zugeordnete herkömmliche Abgasanlage ohne zusätzliche Kühlvorrichtung

gekennzeichnet, da sich hierdurch eine äußerst effektive und bedarfsgerechte Kühlung der Abgase und/oder des $NO_x$-Speicherkatalysators erreichen läßt. Die zusätzliche Kühlleistung liegt vorzugsweise bei zumindest etwa 0,8 kW, insbesondere jedoch bei zumindest etwa 1,0 kW. Eine besonders bevorzugte Ausführungsform besitzt sogar eine zusätzliche Kühlleistung von zumindest etwa 1,5 kW. Bei Vollast des Ottomotors beträgt die zusätzliche Kühlleistung vorzugsweise bis zu etwa 30 kW, oder etwa 22 kW pro Liter Hubraum oder etwa 0,5 kW pro kW Motorleistung.

Weitere Einzelheiten, Merkmale und Vorteile der vorliegenden Erfindung ergeben sich nicht nur aus den zugehörigen Ansprüchen - für sich und/oder in Kombination - sondern auch aus der nachgeschalteten Beschreibung eines erfindungsgemäßen Ausführungsbeispiels in Verbindung mit

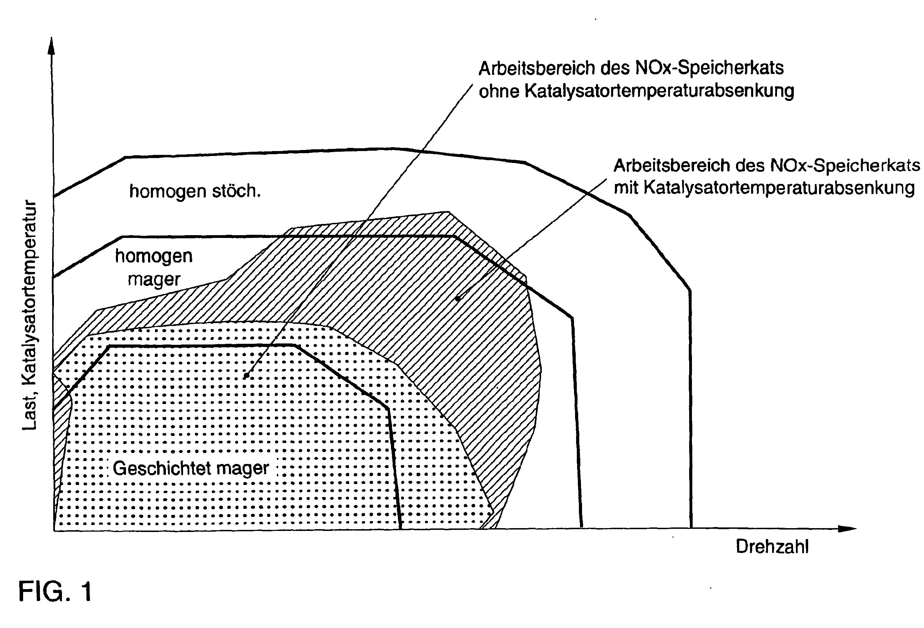

Fig. 1,  die die unterschiedlichen Arbeitsbereiche eines DI-Ottomotors in Abhängigkeit von Drehzahl, Last und Katalysatortemperatur und die Auswirkung einer erfindungsgemäßen Katalysatortemperaturabsenkung auf die Einstellbarkeit einer homogen-mageren Betriebsweise schematisch darstellt.

Wie oben bereits erwähnt wurde, werden DI-Ottomotoren vorzugsweise geschichtet mager betrieben, da sich durch diese Betriebsweise die niedrigsten Verbrauchswerte erreichen lassen. Der bevorzugte Schichtbetrieb ist jedoch nicht nur vom Brennverfahren her auf niedrige Drehzahlen und Lasten beschränkt sondern auch von der Katalysatortemperatur, da durch die mit zunehmender Drehzahl und Last rasch ansteigende Abgastemperatur der thermische Arbeitsbereich eines nachgeschalteten $NO_x$-Speicherkatalysators rasch überschritten wird, oberhalb dessen die Katalysatoraktivität bzw. der Katalysatorwirkungsgrad stark abnehmen, so daß keine ordnungsgemäße Stickoxideinlagerung mehr gewährleistet ist. Die geschichtet magere Betriebsweise gemäß dem Stand der Technik ist daher in Fig. 1 auf den entsprechend gekennzeichneten ursprungsnahen Bereich beschränkt.

In einem Drehzahlbereich zwischen 1500 und 2500 $min^{-1}$ und bei einem effektiven Mitteldruck zwischen 1,5 und 2,5 bar beträgt der vom Brennverfahren her mögliche Schichtanteil noch 100%. Hierbei ergibt sich eine $NO_x$-Emission vor dem $NO_x$-Speicherkatalysator von etwa 20 - 60 g/h und hinter dem $NO_x$-Speicherkatalysator im Magerbetrieb von etwa 0,2 - 1 g/h. Die Temperatur des $NO_x$-Speicherkatalysators liegt zwischen etwa 200 und 280°C, so daß bezüglich des einzuhaltenden Arbeitstemperaturfensters von etwa 200 - 500°C ein unkritischer Katalysatorzustand vorliegt und auch im Hinblick auf eine ordnungsgemäße Abgasreinigung ein Schichtanteil von 100% einstellbar ist.

Bei höheren Drehzahlen und Lasten ist brennverfahrensseitig nur noch ein eingeschränkter Schichtbetrieb möglich, so daß teilweise auf die etwa um 10 - 15% verbrauchsungünstigere homogen-stöchiometrische Betriebsweise ausgewichen werden muß, deren Arbeitsbereich sich in Fig. 1 zu höheren Drehzahlen, Lasten und Katalysatortemperaturen hin demgemäß unmittelbar an dem geschichtete mageren Arbeitsbereich anschließt.

In dem wichtigen Drehzahlbereich zwischen etwa 1500 und 2500 $min^{-1}$ und bei einem effektiven Mitteldruck zwischen etwa 2 - 3,5 bar beträgt der vom Brennverfahren mögliche Schichtanteil noch über 80%. Die $NO_x$-Emissionen

betragen hier vor dem NO$_x$-Speicherkatalysator etwa 20 - 70 g/h und hinter dem Speicherkatalysator im Magerbetrieb etwa 0,3 - 20 g/h.

Dieses Betriebsfenster ist jedoch auch mit einer höheren Abgas- und Katalysatortemperatur verbunden, so daß die Temperatur des NO$_x$-Speicherkatalysators zwischen etwa 300 und 450°C liegt.

Da bei einer Katalysatortemperatur von 450°C und einer NO$_x$-Rohemission von zugleich 70 g/h nur noch eine unzureichende NO$_x$-Konvertierung möglich ist, beträgt der von der Abgasreinigung erforderliche homogen-stöchiometrische Anteil (Lambda = 1 - Anteil) bei frischen Katalysatorsystemen bereits etwa 20% und bei gealterten Katalysatorsystemen bis zu 70%. In diesem verbrauchsungünstigeren Arbeitsmodus, dessen Arbeitsbereich den Schichtladungs-Arbeitsbereich in Fig. 1 im Bereich höherer Drehzahlen, Lasten und Katalysatortemperaturen umgibt, arbeitet der NO$_x$-Speicherkatalysator mit 3-Wege-Eigenschaften.

Die angegebenen Temperatur- und Emissionswerte sowie der von der Abgasreinigung her erforderliche Lambda = 1 - Anteil und die damit verbundene Unzulässigkeit einer Schichtladungs-Betriebsweise beziehen sich auf eine herkömmliche Abgasanlage ohne Zusatzkühlung, die lediglich durch die normale Luftströmung im Kfz-Unterbodenbereich gekühlt wird.

Ein Kraftfahrzeug mit einem 1,4 Liter DI-Ottomotor (Direkteinspritzer) und Fünfganggetriebe hat bei 80 km/h im 5. Gang bei λ = 1,0 einen Abgasmassenstrom von 40 kg/h, eine Abgastemperatur nach Vorkatalysator von 600°C und eine Abgas-Eintrittstemperatur in den NO$_x$-Speicherkatalysator von 490°C, so daß die Wärmeabgabe der Abgasanlage bei einer Umgebungstemperatur von 25°C und einer Luftfeuchte von 60%

$$P_{ab} = m_{Ab} - C_{P,AB} \bullet \text{delta } T_{AB} = 40/3600 \bullet 1,05 \bullet (600\text{-}490) \text{ kW} = 1,283 \text{ kW}$$

beträgt (Ab = Abgas).

Bei erfindungsgemäßer Verwendung einer Kühlvorrichtung der oben beschriebenen Art mit 0,8 kW zusätzlicher Kühlleistung bei den angegebenen Bedingungen für Abgasmassenstrom, Temperatur und Luftfeuchte ergibt sich eine Absenkung der Abgas-Eintrittstemperatur auf etwa 422°C.

Da mit dieser Eingangstemperatur der NO$_x$-Speicherkatalysator deutlich unterhalb seiner maximalen Mager-NO$_x$-Arbeitstemperatur von 500°C liegt, kann ein magerer Schichtladebetrieb des Motors zugelassen werden. Bei einem Schichtbetrieb mit Lambda = 1,9 steigt der Abgasmassenstrom auf 75 kg/h und die Abgastemperatur nach dem Vorkatalysator sinkt auf 520°C. Die Eintrittstemperatur in den NO$_x$-Speicherkatalysator beträgt bei der herkömmlichen Abgasanlage 460°C. Die Kühlleistung der herkömmlichen Abgasanlage beträgt somit 1,313 kW und ändert sich nur geringfügig. Die NO$_x$-Speicherkatalysatortemperatur liegt an der Obergrenze des Mager-NO$_x$-Arbeitsfensters, so daß der Schichtbetrieb wegen der insbesondere bei gealterten Speicherkatalysatoren sehr hohen NO$_x$-Emission stromab des NO$_x$-Speicherkatalysators nur eingeschränkt, mit 0% bis 20% Anteil zugelassen werden kann.

Bei erfindungsgemäßer Verwendung einer Kühlvorrichtung der oben beschriebenen Art mit 0,8 kW zusätzlicher Kühlleistung ergibt sich im Magerbetrieb eine Absenkung der Abgas-Eintrittstemperatur auf etwa 423°C, durch die sich ein deutlich höherer Katalysatorwirkungsgrad mit einer entsprechend merklichen Verringerung der NO$_x$-Emissionswerte auf < 10 g/h erreichen läßt. Zudem ist im Unterschied zu einer herkömmlichen, ungekühlten Abgasanlage ein Schichtanteil von zumindest etwa 30% einstellbar, der mit einer spürbaren Verbrauchssenkung verbunden ist. Die entsprechende Vergrößerung des Schicht-Arbeitsbereiches ist in Fig. 1 schematisch dargestellt.

Mit einer zusätzlichen Kühlleistung von 1,0 kW läßt sich eine Absenkung der Abgas-Eintrittstemperatur auf 414°C und mit 1,5 kW zusätzlicher Kühlleistung sogar auf 391°C erreichen. Hierdurch lassen sich Schichtanteile von zuminest 40% bzw. zumindest 50% einstellen, die durch eine noch deutlichere Verbrauchsabsenkung gekennzeichnet sind.

Der Ottomotor und der zugeordnete NO$_x$-Speicherkatalysator sind hierbei so betreibbar, daß die NO$_x$-Emission hinter dem NO$_x$-Speicherkatalysator nur noch höchstens etwa 6 g/h und der NO$_x$-Korivertierungsgrad des NO$_x$-Speicherkatalysators zumindest etwa 85% beträgt, so daß durch das erfindungsgemäße Verfahren nicht nur alle derzeit gültigen sondern auch alle für die nächsten Jahren festgelegten Abgasvorschriften eingehalten werden.

**Patentansprüche**

**1.** Verfahren zum Betreiben eines magerlauffähigen und schichtladefähigen Ottomotors mit einem nachgeschalteten NO$_x$-Speicherkatalysator durch last- und drehzahlabhängige Einstellung einer geschichtet-mageren oder homogenen, insbesondere stöchiometrischen Betriebsweise,
**dadurch gekennzeichnet,**
**daß** der Ottomotor innerhalb eines Kennfeldbereiches mit den Werten Drehzahlbereich zwischen 1500 und 3000 min$^{-1}$ und effektiver Mitteldruck zwischen 1 und 4 bar zu zumindest 30% mit einem geschichteten Mageranteil betrieben wird, wobei die Katalysatortemperatur durch Kühlung der dem $NO_x$-Speicherkatalysator zugeführten Abgase und/oder des $NO_x$-Speicherkatalysators so gesteuert wird, daß die $NO_x$-Emission hinter dem $NO_x$-Speicherkatalysator höchstens 10 g/h und/oder der mittlere $NO_x$-Konvertierungsgrad des $NO_x$-Speicherkatalysators zumindest 70% beträgt.

2. Verfahren nach Anspruch 1,
**dadurch gekennzeichnet,**
**daß** der Ottomotor mit einem geschichteten Mageranteil über zumindest 40 % des Kennfeldes betrieben wird.

3. Verfahren nach Anspruch 2,
**dadurch gekennzeichnet,**
**daß** der Ottomotor mit einem geschichteten Mageranteil über zumindest 50 % des Kennfeldes betrieben wird.

4. Verfahren nach einem der vorhergehenden Ansprüche,
**dadurch gekennzeichnet,**
**daß** der Ottomotor und der $NO_x$-Speicherkatalysator so betrieben werden, daß die $NO_x$-Emission hinter dem $NO_x$-Speicherkatalysator höchstens 6 g/h und/oder der mittlere $NO_x$-Konvertierungsgrad des $NO_x$-Speicherkatalysators zumindest 85 % beträgt.

5. Verfahren nach einem der vorhergehenden Ansprüche,
**dadurch gekennzeichnet,**
**daß** zur Steuerung der Katalysatortemperatur eine Kühlvorrichtung mit

- einer steuerbaren Kühlleistung und/oder
- Führungseinrichtungen für eine Kühlluftströmung und/oder
- einem anderen Kühlmittel als die Umgebungsluft und/oder
- einer zumindest um 50 % höheren Kühlleistung als eine dem Ottomotor zugeordnete herkömmliche Abgasanlage ohne zusätzliche Kühlvorrichtung verwendet wird.

6. Verfahren nach Anspruch 5,
**dadurch gekennzeichnet,**
**daß** als Führungseinrichtungen für die Luftströmung Luftleitbleche und/oder NACA-Düsen und/oder speziell ausgebildete strömungsbeeinflussende Schallschluck-Unterbodenkapseln verwendet werden.

7. Verfahren nach Anspruch 5 oder 6,
**dadurch gekennzeichnet,**
**daß** eine Kühlvorrichtung mit einer gegenüber herkömmlichen Abgasanlagen zusätzlichen Kühlleistung von zumindest 0,8 kW verwendet wird und/oder die dem $NO_x$-Speicherkatalysator zugeführten Abgase auf $\leq 425°C$ abgekühlt werden.

8. Verfahren nach Anspruch 7,
**dadurch gekennzeichnet,**
**daß** eine Kühlvorrichtung mit einer gegenüber herkömmlichen Abgasanlagen zusätzlichen Kühlleistung von zumindest 1,0 kW verwendet wird und/oder die dem $NO_x$-Speicherkatalysator zugeführten Abgase auf ungefähr $\leq 415°C$ abgekühlt werden.

9. Verfahren nach Anspruch 8,
**dadurch gekennzeichnet,**
**daß** eine Kühlvorrichtung mit einer gegenüber herkömmlichen Abgasanlagen zusätzlichen Kühlleistung von zumindest 1,5 kW verwendet wird und/oder die dem $NO_x$-Speicherkatalysator zugeführten Abgase auf ungefähr $\leq 395°C$ abgekühlt werden.

10. Verfahren nach Anspruch 9,
**dadurch gekennzeichnet,**
**daß** die Kühlung bei Vollast des Ottomotors mit einer gegenüber herkömmlichen Abgasanlagen zusätzlichen Kühlleistung von bis zu 30 kW oder 22 kW pro Liter Hubraum oder 0,5 kW pro kW Motorleistung erfolgt.

11. Verfahren nach einem der vorhergehenden Ansprüche,

**dadurch gekennzeichnet,**
**daß** die Katalysatortemperatur kontinuierlich bestimmt und als Steuergröße zur Einstellung der Motorbetriebsweise verwendet wird.

**12.** Verfahren nach einem der vorhergehenden Ansprüche,
**dadurch gekennzeichnet,**
**daß** der geschichtete Magerbetrieb durch einen Tumble-Drall oder Swirl-Drall, insbesondere Tumble-Drall, in zumindest einem Zylinder des Ottomotors erzeugt wird.

**13.** Kraftfahrzeug mit

- einem magerlauffähigen und schichtladefähigen Ottomotor;
- einer zugeordneten Steuerungseinrichtung zur last- und drehzahlabhängigen Einstellung einer geschichtet-mageren oder homogenen, insbesondere stöchiometrischen Motorbetriebsweise; und
- einer dem Ottomotor nachgeschalteten Abgasanlage mit einem $NO_x$-Speicherkatalysator,

**dadurch gekennzeichnet,**
**daß** die Steuerungseinrichtung so ausgelegt ist, daß sie in einem mittleren Drehzahlbereich zwischen 1500 und 3000 min$^{-1}$ und bei einem effektiven Mitteldruck zwischen 1 und 4 bar zumindest zu einem Anteil von 30% eine geschichtet magere Betriebsweise einstellt und daß die Abgasanlage eine Kühlvorrichtung zur Kühlung des $NO_x$-Speicherkatalysators und/oder der ihm zugeführten Abgase umfaßt, wobei die Katalysatortemperatur durch Kühlung der dem $NO_x$-Speicherkatalysator zugeführten Abgase und/oder des $NO_x$-Speicherkatalysators so gesteuert wird, daß die $NO_x$-Emission hinter dem $NO_x$-Speicherkatalysator höchstens 10 g/h und/oder der mittlere $NO_x$-Konvertierungsgrad des $NO_x$-Speicherkatalysators zumindest 70% beträgt.

**14.** Kraftfahrzeug nach Anspruch 13,
**dadurch gekennzeichnet,**
**daß** der geschichtete Mageranteil zumindest 40 % beträgt.

**15.** Kraftfahrzeug nach Anspruch 14,
**dadurch gekennzeichnet,**
**daß** der geschichtete Mageranteil zumindest 50 % beträgt.

**16.** Kraftfahrzeug nach einem der Ansprüche 13 bis 15,
**dadurch gekennzeichnet,**
**daß** die Kühlvorrichtung

- eine Steuerungseinrichtung für die Kühlleistung und/oder
- Führungseinrichtungen für eine Kühlluftströmung und/oder
- ein anderes Kühlmittel als Luft umfaßt und/oder
- zumindest eine um 50% höhere Kühlleistung als eine dem Ottomotor zugeordnete herkömmliche Abgasanlage ohne zusätzliche Kühlvorrichtung besitzt

**17.** Kraftfahrzeug nach Anspruch 16,
**dadurch gekennzeichnet,**
**daß** die Führungseinrichtungen für eine Kühlluftströmung Luftleitbleche und/oder NACA-Düsen und/oder speziell ausgebildete strömungsbeeinflussende Schallschluck-Unterbodenkapseln umfassen.

**18.** Kraftfahrzeug nach Anspruch 16 oder 17,
**dadurch gekennzeichnet,**
**daß** die Kühlvorrichtung eine gegenüber herkömmlichen Abgasanlagen zusätzliche Kühlleistung von zumindest 0,8 kW besitzt.

**19.** Kraftfahrzeug nach Anspruch 18,
**dadurch gekennzeichnet,**
**daß** die Kühlvorrichtung eine gegenüber herkömmlichen Abgasanlagen zusätzliche Kühlleistung von zumindest 1,0 kW besitzt.

**20.** Kraftfahrzeug nach Anspruch 19,
**dadurch gekennzeichnet,**
**daß** die Kühlvorrichtung eine gegenüber herkömmlichen Abgasanlagen zusätzliche Kühlleistung von zumindest 1,5 kW besitzt.

**21.** Kraftfahrzeug nach Anspruch 20,
**dadurch gekennzeichnet,**
**daß** die Kühlvorrichtung bei Vollast des Ottomotors eine gegenüber herkömmlichen Abgasanlagen zusätzliche Kühlleistung von bis zu 30 kW oder 22 kW pro Liter Hubraum oder 0,5 kW pro kW Motorleistung besitzt.

**22.** Kraftfahrzeug nach einem der Ansprüche 13 bis 21,
**dadurch gekennzeichnet,**
**daß** die Abgasanlage zumindest einen dem $NO_x$-Speicherkatalysator vor- und/oder nachgeschalteten Temperatursensor umfaßt und/oder der $NO_x$-Speicherkatalysator mit zumindest einem Temperatursensor versehen ist.

**23.** Kraftfahrzeug nach einem der Ansprüche 13 bis 22,
**gekennzeichnet durch**
einen magerlauffähigen Ottomotor nach Anspruch 24.

**24.** Magerlauffähiger und schichtladefähiger Ottomotor, mit einer zugeordneten Steuerungseinrichtung zur last- und drehzahlabhängigen Einstellung einer geschichtet-mageren oder homogenen, insbesondere stöchiometrischen Motorbetriebsweise; und mit einer dem Ottomotor nachgeschalteten Abgasanlage mit einem $NO_x$-Speicherkatalysator, **dadurch gekennzeichnet,**
**daß** die Steuerungseinrichtung so ausgelegt ist, daß sie in einem mittleren Drehzahlbereich zwischen 1500 und 3000 $min^{-1}$ und bei einem effektiven Mitteldruck zwischen 1 und 4 bar, wobei die Katalysatortemperatur durch Kühlung der dem $NO_x$-Speicherkatalysator zugeführten Abgase und/oder des $NO_x$-Speicherkatalysators so gesteuert wird, daß die $NO_x$-Emission hinter dem $NO_x$-Speicherkatalysator höchstens 10 g/h und/oder der mittlere $NO_x$-Konvertierungsgrad des $NO_x$-Speicherkatalysators zumindest 70% beträgt.

**Claims**

**1.** Method for operating a spark-ignition engine that is capable of lean-burn and stratified-charge mode, with a downstream $NO_x$ storage catalytic converter, by setting a stratified-lean or homogeneous, in particular stoichiometric mode of operation as a function of load and engine speed, **characterized in that** the spark-ignition engine is at least 30% operated with a stratified lean component within a characteristic diagram range comprising the values engine speed range between 1500 and 3000 $min^{-1}$ and effective mean pressure between 1 and 4 bar, the catalytic converter temperature being controlled, by cooling the exhaust gases fed to the $NO_x$ storage catalytic converter and/or cooling the $NO_x$ storage catalytic converter itself, in such a way that the $NO_x$ emission downstream of the $NO_x$ storage catalytic converter amounts to at most 10 g/h and/or the mean degree of conversion of $NO_x$ in the $NO_x$ storage catalytic converter amounts to at least 70%.

**2.** Method according to Claim 1, **characterized in that** the spark-ignition engine is operated with a stratified lean component over at least 40% of the characteristic diagram.

**3.** Method according to Claim 2, **characterized in that** the spark-ignition engine is operated with a stratified lean component over at least 50% of the characteristic diagram.

**4.** Method according to one of the preceding claims, **characterized in that** the spark-ignition engine and the $NO_x$ storage catalytic converter are operated in such a way that the $NO_x$ emission downstream of the $NO_x$ storage catalytic converter amounts to at most 6 g/h and/or the mean degree of conversion of $NO_x$ in the $NO_x$ storage catalytic converter amounts to at least 85%.

**5.** Method according to one of the preceding claims, **characterized in that**, to control the catalytic converter temperature, a cooling apparatus having

- a controllable cooling power, and/or
- guide devices for a cooling-air flow, and/or

- a coolant other than ambient air, and/or
- a cooling power which is at least 50% higher than a conventional exhaust system without additional cooling apparatus assigned to the spark-ignition engine,

is used.

6. Method according to Claim 5, **characterized in that** the guide devices for the air flow used are air guide plates and/or NACA nozzles and/or specially designed flow-influencing sound-absorbing underbody capsules.

7. Method according to Claim 5 or 6, **characterized in that** a cooling apparatus with an additional cooling power of at least 0.8 kW compared to conventional exhaust systems is used, and/or the exhaust gases fed to the $NO_x$ storage catalytic converter are cooled to $\leq 425°C$.

8. Method according to Claim 7, **characterized in that** a cooling apparatus with an additional cooling power of at least 1.0 kW compared to conventional exhaust systems is used, and/or the exhaust gases fed to the $NO_x$ storage catalytic converter are cooled to approximately $\leq 415°C$.

9. Method according to Claim 8, **characterized in that** a cooling apparatus with an additional cooling power of at least 1.5 kW compared to conventional exhaust systems is used, and/or the exhaust gases fed to the $NO_x$ storage catalytic converter are cooled to approximately $\leq 395°C$.

10. Method according to Claim 9, **characterized in that** the cooling when the spark-ignition engine is under full load is carried out with an additional cooling power compared to conventional exhaust systems of up to 30 kW or 22 kW per litre of capacity or 0.5 kW per kW of engine power.

11. Method according to one of the preceding claims, **characterized in that** the catalytic converter temperature is determined continuously and used as a control variable for setting the engine operating mode.

12. Method according to one of the preceding claims, **characterized in that** the stratified lean mode is produced by a tumbling twist or swirling twist, in particular tumbling twist, in at least one cylinder of the spark-ignition engine.

13. Motor vehicle having

- a spark-ignition engine that is capable of lean-burn and stratified-charge mode;
- an associated control device for setting a stratified-lean or homogeneous, in particular stoichiometric engine operating mode as a function of load and engine speed; and
- an exhaust system connected downstream of the spark-ignition engine and having an $NO_x$ storage catalytic converter,

**characterized in that** the control device is designed in such a way that, in a middle engine speed range between 1500 and 3000 min$^{-1}$ and at an effective mean pressure of between 1 and 4 bar, it sets a stratified-lean mode of operation at least to a level of 30%, and **in that** the exhaust system comprises a cooling apparatus for cooling the $NO_x$ storage catalytic converter and/or the exhaust gases fed to it, the catalytic converter temperature being controlled by cooling the exhaust gases fed to the $NO_x$ storage catalytic converter and/or cooling the $NO_x$ storage catalytic converter itself, in such a way that the $NO_x$ emission downstream of the $NO_x$ storage catalytic converter amounts to at most 10 g/h and/or the mean degree of conversion of $NO_x$ in the $NO_x$ storage catalytic converter amounts to at least 70%.

14. Motor vehicle according to Claim 13, **characterized in that** the stratified lean component amounts to at least 40%.

15. Motor vehicle according to Claim 14, **characterized in that** the stratified lean component amounts to at least 50%.

16. Motor vehicle according to one of Claims 13 to 15, **characterized in that** the cooling apparatus comprises

- a device for controlling the cooling power, and/or
- guide devices for a cooling-air flow, and/or
- a coolant other than air, and/or has
- at least a 50% higher cooling power than a conventional exhaust system without additional cooling apparatus assigned to the spark-ignition engine.

**17.** Motor vehicle according to Claim 16, **characterized in that** the guide devices for a cooling-air flow comprise air guide plates and/or NACA nozzles and/or specially designed flow-influencing sound-absorbing underbody capsules.

**18.** Motor vehicle according to Claim 16 or 17, **characterized in that** the cooling apparatus has an additional cooling power compared to conventional exhaust systems of at least 0.8 kW.

**19.** Motor vehicle according to Claim 18, **characterized in that** the cooling apparatus has an additional cooling power compared to conventional exhaust systems of at least 1.0 kW.

**20.** Motor vehicle according to Claim 19, charaterized in that the cooling apparatus has an additional cooling power compared to conventional exhaust systems of at least 1.5 kW.

**21.** Motor vehicle according to Claim 20, **characterized in that** the cooling apparatus, when the spark-ignition engine is under full load, has an additional cooling power compared to conventional exhaust systems of up to 30 kW or 22 kW per litre of capacity or 0.5 kW per kW of engine power.

**22.** Motor vehicle according to one of Claims 13 to 21, **characterized in that** the exhaust system comprises at least one temperature sensor connected upstream and/or downstream of the $NO_x$ storage catalytic converter and/or the $NO_x$ storage catalytic converter is provided with at least one temperature sensor.

**23.** Motor vehicle according to one of Claims 13 to 22, **characterized by** a spark-ignition engine that is capable of lean-burn mode according to Claim 24.

**24.** Spark-ignition engine that is capable of lean-burn and stratified-charge mode, having an associated control device for setting a stratified-lean or homogeneous, in particular stoichiometric engine operating mode as a function of load and engine speed; and having an exhaust system with an $NO_x$ storage catalytic converter connected downstream of the spark-ignition engine, **characterized in that** the control device is designed for operation in a middle engine speed range between 1500 and 3000 $min^{-1}$ and at an effective mean pressure of between 1 and 4 bar, with the catalytic converter temperature being controlled by cooling the exhaust gases fed to the $NO_x$ storage catalytic converter and/or cooling the $NO_x$ storage catalytic converter itself, in such a way that the $NO_x$ emission downstream of the $NO_x$ storage catalytic converter amounts to at most 10 g/h and/or the mean degree of conversion of $NO_x$ in the $NO_x$ storage catalytic converter amounts to at least 70%.

**Revendications**

**1.** Procédé pour faire fonctionner un moteur à allumage par étincelle qui peut fonctionner sur mélange pauvre et à charge stratifiée et en aval duquel est raccordé un catalyseur à accumulation de $NO_x$, par réglage d'un mode de fonctionnement en conditions stratifiées pauvres ou en conditions homogènes et en particulier en conditions stoechiométriques en fonction de la vitesse de rotation et de la charge,
**caractérisé en ce que**
dans la partie du champ de caractéristiques dans laquelle la vitesse de rotation est comprise entre 1 500 et 3 000 $min^{-1}$ et la pression moyenne effective est comprise entre 1 et 4 bars, le moteur à allumage par étincelle fonctionne avec une proportion pauvre stratifiée d'au moins 30 %, la température du catalyseur étant commandée par refroidissement des gaz d'échappement amenés au catalyseur à accumulation de $NO_x$ et/ou par refroidissement du catalyseur à accumulation de $NO_x$, de telle façon que l'émission de $NO_x$ en aval du catalyseur à accumulation de $NO_x$ soit au maximum de 10 g/h et/ou que le taux moyen de conversion de $NO_x$ du catalyseur à accumulation de $NO_x$ soit au moins de 70 %.

**2.** Procédé selon la revendication 1, **caractérisé en ce que** sur au moins 40 % du champ de caractéristiques, le moteur à allumage par étincelle fonctionne avec une proportion pauvre stratifiée.

**3.** Procédé selon la revendication 2, **caractérisé en ce que** sur au moins 50 % du champ de caractéristiques, le moteur à allumage par étincelle fonctionne avec une proportion pauvre stratifiée.

**4.** Procédé selon l'une des revendications précédentes, **caractérisé en ce que** le moteur à allumage par étincelle et le catalyseur à accumulation de $NO_x$ fonctionnent de telle manière qu'en aval du catalyseur à accumulation de $NO_x$, l'émission de $NO_x$ soit au maximum de 6 g/h et/ou de façon telle que le taux moyen de conversion de $NO_x$ du catalyseur à accumulation de $NO_x$ soit d'au moins 85 %.

**5.** Procédé selon l'une des revendications précédentes, **caractérisé en ce que** pour commander la température de catalyseur, on utilise un dispositif de refroidissement qui présente

- une puissance de refroidissement qui peut être commandée et/ou
- des dispositifs qui guident un écoulement d'air de refroidissement et/ou
- un agent de refroidissement différent de l'air ambiant et/ou
- une puissance de refroidissement supérieure d'au moins 50 % à celle d'une installation classique de gaz d'échappement associée à un moteur à allumage par étincelle et sans dispositif supplémentaire de refroidissement.

**6.** Procédé selon la revendication 5, **caractérisé en ce que** comme dispositifs qui guident l'écoulement de l'air, on utilise des déflecteurs d'air, des ajutages NACA et/ou des supports élastiques de forme spéciale qui agissent sur l'écoulement.

**7.** Procédé selon les revendications 5 ou 6, **caractérisé en ce que** l'on utilise un dispositif de refroidissement dont la puissance de refroidissement est d'au moins 0,8 kW supérieure à celle d'installations classiques de gaz d'échappement et/ou **en ce que** les gaz d'échappement amenés au catalyseur à accumulation de $NO_x$ sont refroidis à $\leq$ 425°C.

**8.** Procédé selon la revendication 7, **caractérisé en ce que** l'on utilise un dispositif de refroidissement dont la puissance de refroidissement est d'au moins 1,0 kW supérieure à celle d'installations classiques de gaz d'échappement et/ou **en ce que** les gaz d'échappement amenés au catalyseur à accumulation de $NO_x$ sont refroidis à environ $\leq$ 415°C.

**9.** Procédé selon la revendication 8, **caractérisé en ce que** l'on utilise un dispositif de refroidissement qui présente une puissance supplémentaire de refroidissement d'au moins 1,5 kW supérieure à celle d'installations classiques de gaz d'échappement et/ou **en ce que** les gaz d'échappement amenés au catalyseur à accumulation de $NO_x$ sont refroidis à environ $\leq$ 395°C.

**10.** Procédé selon la revendication 9, **caractérisé en ce que** lorsque le moteur à allumage par étincelle fonctionne à pleine charge, le refroidissement est effectué avec un supplément de puissance de refroidissement de jusque 30 kW ou 22 kW par litre de cylindrée unitaire ou de 0,5 kW par kW de puissance de moteur par rapport à des installations classiques de gaz d'échappement.

**11.** Procédé selon l'une des revendications précédentes, **caractérisé en ce que** la température de catalyseur est déterminée en continu et est utilisée comme grandeur de commande pour régler le mode de fonctionnement du moteur.

**12.** Procédé selon l'une des revendications précédentes, **caractérisé en ce que** dans au moins un cylindre du moteur à allumage par étincelle, le fonctionnement en conditions stratifiées pauvres est produit par une rotation autour d'un axe transversal au cylindre ou par une rotation autour de l'axe longitudinal du cylindre, et en particulier par une rotation autour d'un axe transversal par rapport au cylindre.

**13.** Véhicule automobile qui présente

- un moteur à allumage par étincelle qui peut fonctionner sur mélange pauvre et à charge stratifiée et en particulier un moteur à allumage par étincelle et à injection directe,
- un dispositif de commande associé qui règle un mode de fonctionnement du moteur en conditions stratifiées pauvres ou en conditions homogènes et en particulier en conditions stoechiométriques en fonction de la charge et de la vitesse de rotation et
- une installation de gaz d'échappement qui est agencée en aval du moteur à étincelle et qui présente un catalyseur à accumulation de $NO_x$,

**caractérisé en ce que** le dispositif de commande est configuré de telle façon que, dans une plage médiane de vitesse de rotation comprise entre 1 500 et 3 000 min$^{-1}$ et à une pression moyenne effective comprise entre 1 et 4 bars, il établit un mode de fonctionnement en conditions stratifiées pauvres au moins pour une proportion de 30 % et **en ce que** l'installation de gaz d'échappement comprend un dispositif de refroidissement qui refroidit le catalyseur à accumulation de $NO_x$ et/ou les gaz d'échappement amenés à celui-ci, la température de catalyseur étant commandée par refroidissement des gaz d'échappement amenés au catalyseur à accumulation de $NO_x$ et/ou par refroidissement du catalyseur à accumulation de $NO_x$ de telle façon que l'émission de $NO_x$ en aval du catalyseur à accumulation de $NO_x$ soit au maximum de 10 g/h et/ou de telle façon que le taux moyen de conversion de $NO_x$ du catalyseur à accumulation de $NO_x$ soit d'au moins 70 %.

**14.** Véhicule automobile selon la revendication 13, **caractérisé en ce que** la proportion stratifiée pauvre est d'au moins 40 %.

**15.** Véhicule automobile selon la revendication 14, **caractérisé en ce que** la proportion stratifiée pauvre est d'au moins 50 %.

**16.** Véhicule automobile selon l'une des revendications 13 à 15, **caractérisé en ce que** le dispositif de refroidissement comprend

- un dispositif de commande de la puissance de refroidissement et/ou
- des dispositifs qui guident un écoulement d'air de refroidissement et/ou
- un agent de refroidissement différent de l'air ambiant et/ou
- une puissance de refroidissement supérieure d'au moins 50 % à celle d'une installation classique de gaz d'échappement associée à un moteur à allumage par étincelle et dépourvue de dispositif supplémentaire de refroidissement.

**17.** Véhicule automobile selon la revendication 16, **caractérisé en ce que** les dispositifs qui guident un écoulement d'air de refroidissement comprennent des déflecteurs d'air et/ou des ajutages NACA et/ou des supports élastiques de forme spéciale qui agissent sur l'écoulement.

**18.** Véhicule automobile selon les revendications 16 ou 17, **caractérisé en ce que** par rapport à des installations classiques de gaz d'échappement, le dispositif de refroidissement a une puissance supplémentaire de refroidissement d'au moins 0,8 kW.

**19.** Véhicule automobile selon la revendication 18, **caractérisé en ce que** par rapport à des installations classiques de gaz d'échappement, le dispositif de refroidissement a une puissance supplémentaire de refroidissement d'au moins 1,0 kW.

**20.** Véhicule automobile selon la revendication 19, **caractérisé en ce que** par rapport à des installations classiques de gaz d'échappement, le dispositif de refroidissement a une puissance supplémentaire de refroidissement d'au moins 1,5 kW.

**21.** Véhicule automobile selon la revendication 20, **caractérisé en ce que**, lorsque le moteur à allumage par étincelle est à pleine charge, le dispositif de refroidissement a, par rapport aux installations classiques de gaz d'échappement, une puissance supplémentaire de refroidissement qui va jusque 30 kW ou 22 kW par litre de cylindrée unitaire ou de 0,5 kW par kW de puissance de moteur.

**22.** Véhicule automobile selon l'une des revendications 13 à 21, **caractérisé en ce que** l'installation de gaz d'échappement comprend au moins une sonde de température située en amont et/ou en aval du catalyseur à accumulation de $NO_x$ et/ou **en ce que** le catalyseur à accumulation de $NO_x$ est doté d'au moins une sonde de température.

**23.** Véhicule automobile selon l'une des revendications 13 à 22, **caractérisé par** un moteur à allumage par étincelle selon la revendication 24, capable de fonctionner sur mélange pauvre.

**24.** Moteur à allumage par étincelle qui peut fonctionner sur mélange pauvre et à charge stratifiée et en particulier moteur à allumage par étincelle à injection directe qui présente un dispositif de commande associé qui, en fonction de la charge et de la vitesse de rotation, établit un mode de fonctionnement de moteur en conditions stratifiées pauvres ou en conditions homogènes et en particulier en conditions stoechiométriques, qui présente une installation de gaz d'échappement située en aval du moteur à explosion et munie d'un catalyseur à accumulation de $NO_x$, **caractérisé en ce que** le dispositif de commande est configuré pour fonctionner dans une plage médiane de vitesse de rotation comprise entre 1 500 et 3 000 $min^{-1}$ et à une pression moyenne effective comprise entre 1 et 4 bars, la température de catalyseur étant commandée par refroidissement des gaz d'échappement amenés au catalyseur à accumulation de $NO_x$ et/ou par refroidissement du catalyseur à accumulation de $NO_x$ et **en ce que** l'émission de $NO_x$ en aval du catalyseur à accumulation de $NO_x$ soit au maximum de 10 g/h et/ou de telle façon que le taux moyen de conversion de $NO_x$ du catalyseur à accumulation de $NO_x$ soit d'au moins 70 %.

Arbeitsbereich des NOx-Speicherkats ohne Katalysatortemperaturabsenkung

Arbeitsbereich des NOx-Speicherkats mit Katalysatortemperaturabsenkung

Drehzahl

homogen stöch.

homogen mager

Geschichtet mager

Last, Katalysatortemperatur

FIG. 1